# EUROPÄISCHE PATENTANMELDUNG

(11) **EP 0 639 323 A2**
(43) Veröffentlichungstag der Anmeldung: **22.02.1995**
(21) Anmeldenummer: 94112085.9
(22) Anmeldetag: 03.08.1994
(51) Int. Cl.: A01D 43/00, A01D 43/10

(54) **Erntemaschine zur Grünfutteraufbereitung**

(30) Priorität: 17.08.1993 DE 4327592
(71) Anmelder: SAME S.p.A., I-24047 Treviglio (Bergamo) (IT)
(72) Erfinder: von Allwörden, Wilhelm, Dipl.-Ing., D-89168 Oberstotzingen (DE); Gropp, Heiko, D-89428 Syrgenstein (DE); Leppat, Frank, D-89407 Dillingen/Donau (DE); Häfele, Martin, D-73460 Hüttlingen (DE)
(74) Vertreter: Nau, Walter, Dipl.-Ing.

(57) **Zusammenfassung**

2. Ausgehend von einer Erntemaschine zur Grünfutteraufbereitung, welche zumindest eine zur Beschleunigung des Trocknungsprozeßes von abgemähtem Halmgut vorgesehene und aus zumindest zwei einander zugeordneten Elementen, insbesondere Rollen, bestehende Preßvorrichtung aufweist, wobei die Elemente einen Preßspalt bilden, durch den das Halmgut zur Bildung einer Halmgutmatte geführt wird und zumindest ein Element (eine Rolle) der Preßvorrichtung elastisch verformbar und dessen Oberfläche profiliert ausgebildet ist, wird die Aufgabe, neben einem optimalen Zusammenhalt der gepreßten Halmgutmatte vor allen Dingen eine optimale und größtmögliche Feuchtigkeitsabfuhr unter Beibehaltung eines erforderlichen Preßdruckes zu gewährleisten, dadurch gelöst, daß das zumindest eine Element beziehungsweise dessen Profilierung derart gestaltet ist, daß die Halmgutmatte zumindest einseitig wellenartig gepreßt wird

## Beschreibung

Die Erfindung betrifft eine Erntemaschine zur Grünfutteraufbereitung, welche zumindest eine zur Beschleunigung des Trocknungsprozeßes von abgemähtem Halmgut vorgesehene aus zumindest zwei Elementen bestehende Preßvorrichtung aufweist, nach dem Oberbegriff des Patentanspruches 1.

Aus der DE 42 29 060 ("Erntemaschine zur Grünfutteraufbereitung", Anmeldetag: 01.09.1992) ist eine Erntemaschine zur Grünfutteraufbereitung bekannt, welche zumindest eine zur Beschleunigung des Trocknungsprozeßes von abgemähtem Halmgut vorgesehene und aus zumindest zwei Elementen, insbesondere Rollen, bestehende Preßvorrichtung aufweist, wobei die Elemente einen Preßspalt bilden, durch den das Halmgut geführt wird und zumindest ein Element (eine Rolle) der Preßvorrichtung elastisch verformbar und die Oberfläche zumindest eines Elementes profiliert ausgebildet ist. Aufgrund einer Profilierung ist eine Abfuhr der Feuchtigkeit, die beim Preßvorgang entsteht, möglich. Weitere Angaben sind diesem Dokument hinsichtlich der Profilierung nicht zu entnehmen. Die Verwendung ausschließlich ebener Oberflächen beziehungsweise von Bändern mit ebenen Oberflächen, wie sie in der DE 42 29 060 beschrieben sind, hat den Nachteil, daß sich beim Preßvorgang ein "Aquaplaning-Effekt" einstellt, da die in dem Halmgut enthaltene Flüssigkeit inkompressibel ist, und ein optimaler Preßvorgang nicht gewährleistet ist.

Der Erfindung liegt die Aufgabe zugrunde, eine Erntemaschine zur Grünfutteraufbereitung derart auszubilden, daß neben einem optimalen Zusammenhalt der gepreßten Halmgutmatte vor allen Dingen eine optimale und größtmögliche Feuchtigkeitsabfuhr unter Beibehaltung eines erforderlichen Preßdruckes gewährleistet ist.

Diese Aufgabe ist dadurch gelöst, daß wenigstens ein Element bzw. dessen Profilierung derart gestaltet, daß die Halmgutmatte zumindest einseitig wellenartig gepreßt wird. Dies hat den Vorteil, daß durch die wellenartige Pressung die Oberfläche der abgelegten Halmgutmatte vergrößert wird, so daß eine optimale und größtmögliche Feuchtigkeitsabfuhr gewährleistet ist. In Ergänzung dazu ist durch eine Walkarbeit des elastisch verformbaren Materials eine Ablösung der Halmgutmatte von den Elementen gegeben. Die Profilierung hat den Vorteil, daß die Feuchtigkeit, die in dem Halmgut enthalten ist, zum Zeitpunkt des Pressens in die Profilierung, insbesondere in eine Vertiefung, ausweichen kann, so daß insbesondere in erhabenen Bereichen der Profilierung ein erhöhter Preßdruck vorliegt. Durch diesen gegenüber Elementen mit ebener Oberfläche erhöhten Preßdruck kommt es zu einer Förderung der Feuchtigkeit aus dem Inneren des Halmgutes an die Oberfläche des Halmgutes, wodurch eine Beschleunigung der Verdunstung gegeben ist. Darüber hinaus bewirkt dieser erhöhte spezifische Preßdruck zum einen ein Zerplatzen von Pflanzenzellen, so daß sich hier ergänzend ein Aufbereitungseffekt einstellt, während zum anderen vermieden wird, daß sich innerhalb des gepressten Halmgutes (innerhalb der Halmgutmatte) isolierende Lufteinschlüsse (Luftpolster) bilden.

Die in den weiteren Unteransprüchen angegebenen Ausbildungen betreffen vorteilhafte und alternative Weiterbildungen der Erfindungen, die im folgenden näher beschrieben und in den Zeichnungen gezeigt sind.

Es zeigen:
- Figuren 1 bis 6:: Profilartige Ausgestaltungen der Elemente,
- Figur 7:: eine prinzipielle Ausgestaltung einer Preßvorrichtung,
- Figur 8:: eine weitere Ausgestaltung einer Preßvorrichtung,
- Figur 9:: verschiedenartige Formen der Halmgutmatte.

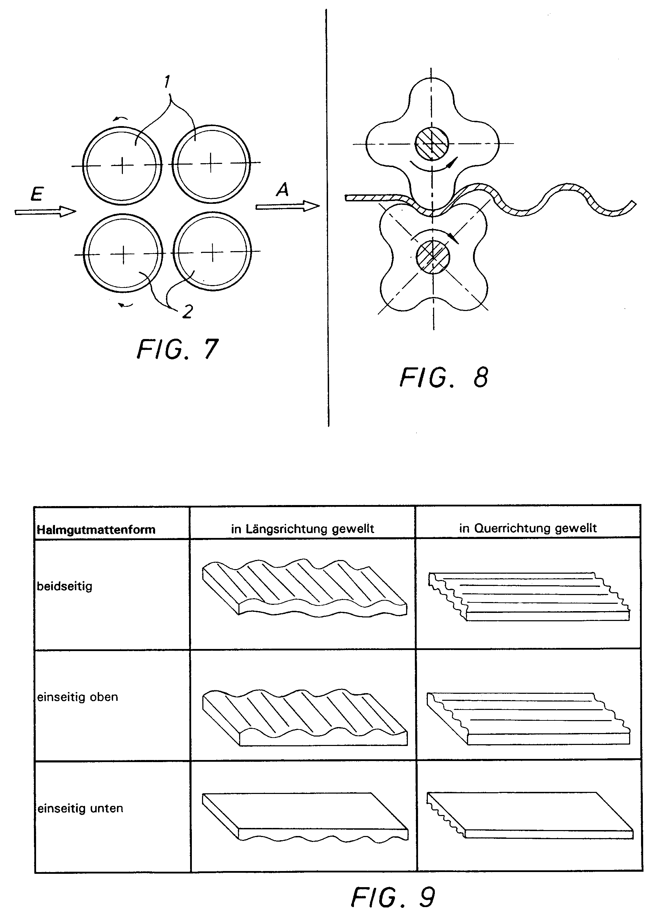

In Figur 7 ist zunächst eine prinzipielle Ausgestaltung einer Preßvorrichtung, die an sich bekannt ist, gezeigt. Diese Preßvorrichtung weist zumindest zwei einander zugeordnete Elemente auf, bei denen es sich jeweils um ein Element 1 und ein Element 2 handelt. Diese einander zugeordneten Elemente 1 und 2 bilden einen Preßspalt, durch den das Halmgut - eingeführt in einem Eingangsbereich E - zur Bildung einer Halmgutmatte geführt wird, wobei die Halmgutmatte die Preßvorrichtung in einem Ausgangsbereich A verläßt. Die Elemente 1 und 2 sind elastisch verformbar, wobei dieser Effekt bspw. dadurch erreicht wird, daß das gesamte Element aus einem elastisch verformbaren Material besteht oder einen starren Kern aufweist, der mit einem elastisch verformbaren Material (Mantel) überzogen ist.

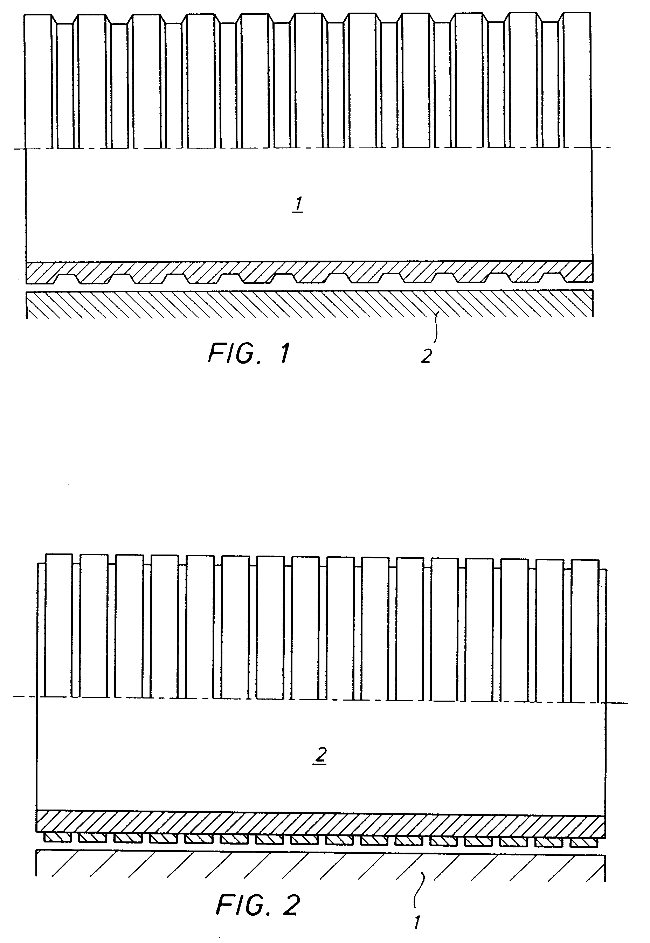

Die Figuren 1 bis 6 zeigen verschiedenartige Profile. So ist es erfindungsgemäß vorgesehen, daß das Profil eines Elementes als sich zumindest teilweise über die Breite des Elementes erstreckendes und quer zur Längsachse des Elementes angeordnetes Profil in Form von alternierend angeordneten Erhebungen (Stege) und Vertiefungen (Nuten) auf bzw. in der Oberfläche des Elementes ausgestaltet ist. In den Figuren 1 bis 6 ist gezeigt, daß sich das Profil eines Elementes (bspw. Element 1) über die gesamte Breite des Elementes 1 erstreckt. Darüber hinaus ist in den Figuren 1 bis 4 gezeigt, daß das Element 2 (bzw. umgekehrt) eine glatte Oberfläche aufweist, wodurch die Halmgutmatte einseitig wellenartig gepreßt wird. Die Höhe der Erhebung gegenüber der Vertiefung liegt beispielsweise in einem Bereich zwischen 5 und 15 Millimetern.

In Figur 1 ist gezeigt, daß der Bereich zwischen den Erhebungen rautenförmig ausgebildet ist. Dabei ist es vorgesehen, daß die Fläche zwischen den Erhebungen und den Vertiefungen einen Winkel zwischen 0 < α < 90° (bezogen auf eine senkrecht zur Längsachse des Elementes gerichtete Achse) einschließt.

In Figur 2 ist ein streifenartig ausgebildetes Profil gezeigt, das feritgungstechnisch einfach herstellbar ist. So ist es bspw. denkbar, daß ein Element mit einem starren Kern einen elastisch verformbaren Überzug erhält, auf dem wiederrum streifenartige Erhebungen aufgebracht (bspw. aufgeklebt) werden.

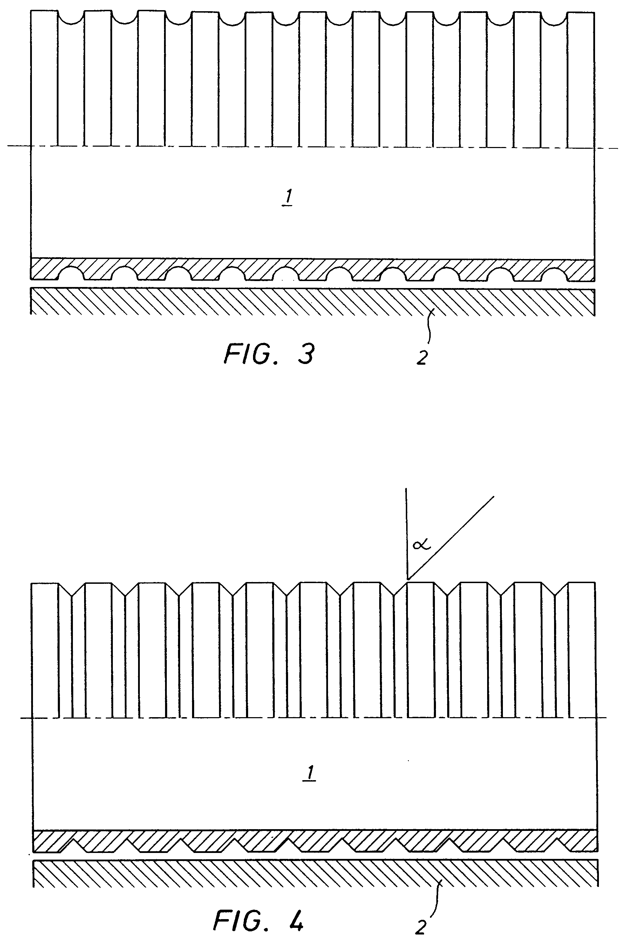

In Figur 3 ist gezeigt, daß der Bereich zwischen den Erhebungen eines Elementes hohlkehlenförmig ausgebildet ist.

In Figur 4 ist gezeigt, daß der Bereich zwischen den Erhebungen eines Elementes im wesentlichen dreieckförmig ausgebildet ist.

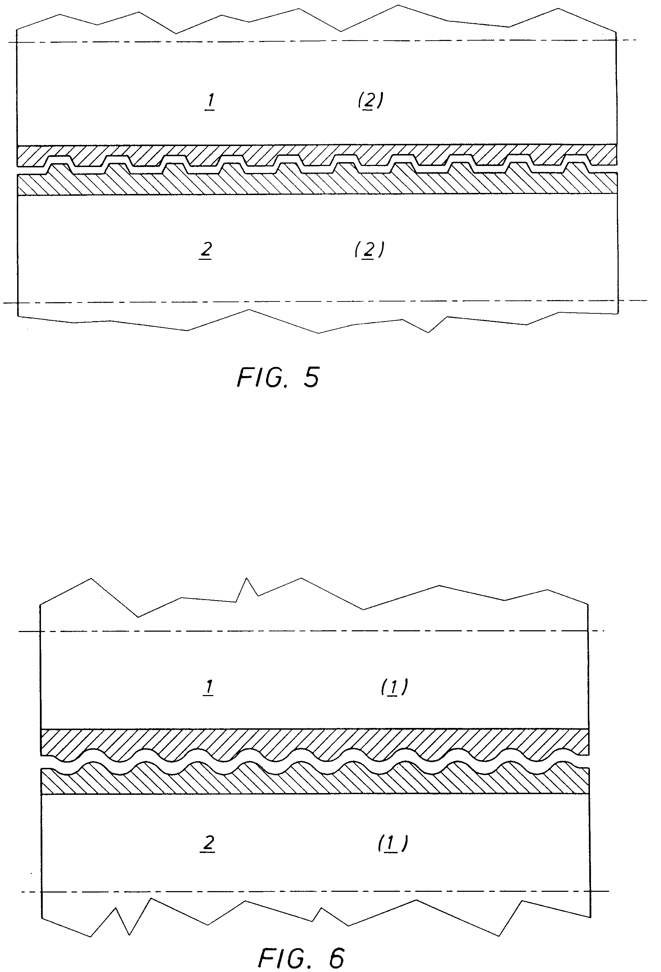

Ergänzend zu den Ausgestaltungen der Bereiche zwischen den Erhebungen ist es erfindungsgemäß vorgesehen, daß die Erhebungen selbst ein Plateau (gezeigt in den Figuren 1 bis 4) aufweisen oder alternativ dazu spitz zulaufend oder halbrundförmig (bspw. gezeigt in Figur 6) ausgebildet sind.

Es ist weiterhin erfindungsgemäß vorgesehen, daß die Erhebungen des zumindest einen Elementes 1 in die Vertiefungen des zumindest einen zugeordneten Elementes 2 eingreifen und umgekehrt. Durch diese Ausführungsform erfolgt eine beidseitige Pressung der Halmgutmatte, wodurch die Auflagefläche der Halmgutmatte auf dem Boden verringert ist und eine Aufnahme von Bodenfeuchtigkeit verringert wird. Darüber hinaus ist es denkbar, daß in Förderrichtung des Halmgutes (von E nach A in Figur 7) hintereinander mindestens zwei Elemente 1 oder 2 angeordnet sind, denen zumindest ein Element 2 oder 1 zugeordnet ist, wobei die Erhebungen und Vertiefungen der hintereinander angeordneten Elemente 1 oder 2 so versetzt sind, daß einer Vertiefung eine Erhebung folgt und umgekehrt. Dies ist in Figur 5 bzw. in Figur 6 durch die in Klammern gesetzten Bezugsziffern angedeutet, so daß es sich bei den Figuren 5 bzw. 6 zum einen um einen Querschnitt durch die Preßvorrichtung gemäß Figur 7 und zum anderen um einen Längsschnitt durch die Preßvorrichtung gemäß Figur 7 (bei Betrachtung der Bezugsziffern in Klammern) handelt.

Figur 8 zeigt eine alternative Ausgestaltung einer Preßvorrichtung, wobei das zumindest eine Element 1 in die Vertiefungen des zumindest einen zugeordneten Elementes 2 eingreift und (wie bpsw. in Figur 8 gezeigt ist nach einer Vierteldrehung) umgekehrt. Dadurch entsteht eine beidseitig in Längsrichtung wellenartig gepreßte Halmgutmatte.

In Figur 9 sind verschiedene Formen von Halmgutmatten gezeigt, die mit der erfindungsgemäß vorgeschlagenen Profilierung erzielbar sind. In Abhängigkeit der beschriebenen Ausführungsformen der Elemente ergeben sich Halmgutmattenformen, die eine einseitige oder beidseitige Wellenform aufweisen. Bei der einseitigen Ausgestaltung hängt es davon ab, welches Element der Preßvorrichtung eine Profilierung aufweist und welches nicht. Darüber hinaus ist es denkbar, daß eine Halmgutmatte, die die Preßvorrichtung verläßt und unten eine Wellenform aufweist, in einer der nachgeschalteten Preßvorrichtung Wendevorrichtung die Halmgutmatte zu wenden, so daß die Wellenform nach Ablage der Halmgutmatte nach oben zeigt. Darüber hinaus ergeben sich in Abhängigkeit der Profilierung der Elemente sowohl in Längsrichtung als auch in Querrichtung wellenartige Preßungen. Bevorzugte Formen der Halmgutmatte sind solche Formen, bei denen die wellenartige Preßung nach oben zeigt, da hiermit eine größtmögliche Oberfläche gegeben ist, die zu einer optimalen Feuchtigkeitsabfuhr führt.

## Patentansprüche

1. Erntemaschine zur Grünfutteraufbereitung, welche zumindest eine zur Beschleunigung des Trocknungsprozeßes von abgemähtem Halmgut vorgesehene und aus zumindest zwei einander zugeordneten Elementen, insbesondere Rollen, bestehende Preßvorrichtung aufweist, wobei die Elemente einen Preßspalt bilden, durch den das Halmgut zur Bildung einer Halmgutmatte geführt wird und zumindest ein Element (eine Rolle) der Preßvorrichtung elastisch verformbar und die Oberfläche zumindest eines Elementes profiliert ausgebildet ist,
*dadurch gekennzeichnet*, daß das zumindest eine Element beziehungsweise dessen Profilierung derart gestaltet ist, daß die Halmgutmatte zumindest einseitig wellenartig gepreßt wird

2. Erntemaschine zur Grünfutteraufbereitung nach Anspruch 1,
*dadurch gekennzeichnet*, daß das Profil eines Elementes als sich zumindest teilweise über die Breite des Elementes erstreckendes und quer zur Längsachse des Elementes angeordnetes Profil in Form von alternierend angeordneten Erhebungen und Vertiefungen auf bzw. in der Oberfläche des Elementes ausgestaltet ist.

3. Erntemaschine zur Grünfutteraufbereitung nach Anspruch 1 oder 2,
*dadurch gekennzeichnet*, daß die Fläche zwischen den Erhebungen und Vertiefungen einen Winkel zwischen 0 < α < 90° (bezogen auf eine senkrecht zur Längsachse des Elementes gerichtete Achse) einschließt.

4. Erntemaschine zur Grünfutteraufbereitung nach einem der vorhergehenden Ansprüche,
*dadurch gekennzeichnet*, daß der Bereich zwischen den Erhebungen im wesentlichen hohlkehlenförmig ausgebildet ist.

5. Erntemaschine zur Grünfutteraufbereitung nach einem der vorhergehenden Ansprüche,
*dadurch gekennzeichnet*, daß der Bereich zwischen den Erhebungen im wesentlichen dreieckförmig ausgebildet ist.

6. Erntemaschine zur Grünfutteraufbereitung nach einem der vorhergehenden Ansprüche,
*dadurch gekennzeichnet*, daß der Bereich zwischen den Erhebungen im wesentlichen rautenförmig ausgebildet ist.

7. Erntemaschine zur Grünfutteraufbereitung nach einem der vorhergehenden Ansprüche,
*dadurch gekennzeichnet*, daß die Erhebungen ein Plateau aufweisen.

8. Erntemaschine zur Grünfutteraufbereitung nach einem der vorhergehenden Ansprüche,
*dadurch gekennzeichnet*, daß die Erhebungen im wesentlichen spitz zulaufend ausgebildet sind.

9. Erntemaschine zur Grünfutteraufbereitung nach einem der vorhergehenden Ansprüche,
*dadurch gekennzeichnet*, daß die Erhebungen im wesentlichen halbrundförmig ausgebildet sind.

10. Erntemaschine zur Grünfutteraufbereitung nach einem der vorhergehenden Ansprüche,
*dadurch gekennzeichnet*, daß die Erhebungen des zumindest einen Elementes in die Vertiefungen des zumindest einen zugeordneten Elementes eingreifen und umgekehrt.

11. Erntemaschine zur Grünfutteraufbereitung nach einem der vorhergehenden Ansprüche,
*dadurch gekennzeichnet,* daß in Förderrichtung des Halmgutes hintereinander mindestens zwei Elemente angeordnet sind, denen zumindest ein Element zugeordnet ist, wobei die Erhebungen und Vertiefungen der hintereinander angeordneten Elemente derart versetzt sind, daß einer Vertiefung eine Erhebung erfolgt und umgekehrt.
